# EUROPÄISCHE PATENTANMELDUNG

(11) **EP 1 500 919 A1**
(43) Veröffentlichungstag der Anmeldung: **26.01.2005**
(21) Anmeldenummer: 04013215.1
(22) Anmeldetag: 04.06.2004
(51) Int. Cl.: G01N 11/16, H01L 41/00, G01N 29/02

(54) **Viskositätsanordnung und entsprechendes Herstellungsverfahren**

(30) Priorität: 25.07.2003 DE 10333970
(71) Anmelder: ROBERT BOSCH GMBH, 70442 Stuttgart (DE)
(72) Erfinder: Jakoby, Bernhard, 1180 Wien (AT); Buskies, Matthias, 72800 Eningen (DE); Scherer, Monika, 53225 Bonn (DE)

(57) **Zusammenfassung**

Die vorliegende Erfindung beschreibt eine Viskositätssensoranordnung und ein entsprechendes Herstellungsverfahren. Die Viskositätssensoranordnung umfasst eine piezo-elektrischen Viskositätssensoreinrichtung (5), die sich vollständig in der zu messenden Flüssigkeit (10) befindet und elektrische Kontaktstellen (6) für eine elektrische Ansteuerung von Volumenschwingungen auf ihrer Oberfläche aufweist, die bezüglich der Flüssigkeit (10) resistent sind; elektrische Zufuhrleitungen (7), die bezüglich der Flüssigkeit (10) resistent sind und die einerseits mit einer Ansteuer-/ Auswerteelektronik außerhalb der Flüssigkeit (10) und andererseits mit den Kontaktstellen (6) auf der Oberfläche der Viskositätssensoreinrichtung (5) verbunden sind; wobei die Kontaktstellen aus Chrom bestehen und sich auf polierten Bereichen der Oberfläche der Viskositätssensoreinrichtung (5) befinden.

## Beschreibung

### STAND DER TECHNIK

Die vorliegende Erfindung betrifft eine Viskositätssensoranordnung und ein entsprechendes Herstellungsverfahren.

Bei der Überwachung von Flüssigkeiten, insbesondere flüssiger Motorbetriebsstoffe, wie z.B. Motoröl, können mehrere chemische und physikalische Eigenschaften der Flüssigkeit zur Überwachung ihres "Zustandes" herangezogen werden. Ein wichtiges Bewertungskriterium für den aktuellen Flüssigkeitszustand ist dabei die Viskosität η, die mit Hilfe eines Viskositätssensors gemessen werden kann.

Zur Viskositätsmessung werden seit geraumer Zeit piezoelektrische Dickenscherschwinger, welche beispielsweise aus Quarz hergestellt sind, verwendet. Siehe dazu beispielsweise S. J. Martin et. al., Sens. Act. A 44 (1994) Seiten 209-218. Wird ein solcher Dickenscherschwinger in eine viskose Flüssigkeit getaucht, so ändern sich die Resonanzfrequenz der Eigenschwingung und deren Dämpfung in Abhängigkeit von der Viskosität und der Dichte der viskosen Flüssigkeit. Da die Dichte für typische Flüssigkeiten in weit geringerem Maße variiert als die Viskosität, stellt ein derartiges Bauteil praktisch einen Viskositätssensor dar.

Die DE 101 12433 3 A1 offenbart eine Viskositätssensoranordnung mit einer piezo-elektrischen Sensoreinrichtung, die sich vollständig in der zu messenden Flüssigkeit befindet und elektrische Kontaktstellen für eine elektrische Ansteuerung aufweist, die bezüglich der Flüssigkeit resistent sind und mit elektrischen Zufuhrleitungen, die bezüglich der Flüssigkeit resistent sind und die einerseits mit einer Ansteuer-/ Auswerteelektronik außerhalb der Flüssigkeit und andererseits mit den Kontaktstellen der Sensoreinrichtung mittels eines geeigneten mit Metallteilchen versehenen Leitklebstoffes verbunden sind.

Insbesondere bei der Anwendung in aggressiven oder korrosiven Flüssigkeiten, z.B. Motor- oder Getriebeöl, wird die Sensoroberfläche stark beansprucht. Speziell bei der Anwendung in Motoröl bildet sich mit der Zeit ein Belag auf der Sensoroberfläche, der die Sensoreigenschaften verändert.

Eine weitere Gruppe von Viskositätssensoren ist aus der DE 198 50 799 A1 bekannt. Hierbei handelt es sich um sogenannte Oberflächenschwinger (SAW), bei denen ein Schutz gegenüber korrosiven bzw. aggressiven Flüssigkeiten üblicherweise durch eine Passivierung des Substrats angestrebt wird.

### VORTEILE DER ERFINDUNG

Die erfindungsgemäße Viskositätssensoranordnung mit den Merkmalen des Anspruchs 1 bzw. das entsprechende Herstellungsverfahren mit den Merkmalen des Anspruchs 8 weisen gegenüber bekannten Lösungsansetzen den Vorteil auf, dass die Elektrodengestaltung gegenüber aggressiven bzw. korrosiven Flüssigkeiten optimiert ist.

Die polierte Oberfläche erreicht man durch Polieren der Vorder- und Rückseite des Schwingquarzes. Darauf wird zur Herstellung der Elektroden eine Metallschicht aus Chrom aufgesputtert. Chrom ist bei Schwingquarzherstellern bereits als Haftschicht für andere Metalle im Einsatz und somit leicht als Elektrodenmetallisierung anwendbar.

In den Unteransprüchen finden sich vorteilhafte Weiterbildungen und Verbesserungen des Gegenstandes der Erfindung.

Gemäß einer bevorzugten Weiterbildung ist die piezo-elektrische Viskositätssensoreinrichtung als scheibenförmiger Quarzkristall ausgebildet, der durch die elektrische Ansteuerung zu Scherschwingungen anregbar ist, wobei die Kontaktstellen der Viskositätssensoreinrichtung auf der Vorder- und Rückseite des scheibenförmigen Quarzkristalls ausgebildet sind.

Gemäß einer weiteren bevorzugten Weiterbildung lassen die Kontaktstellen der Viskositätssensoreiririchtung die Vorder- und Rückseite in einem Randbereich frei.

Gemäß einer weiteren bevorzugten Weiterbildung sind die elektrischen Zufuhrleitungen als Kontaktfedem ausgebildet.

Gemäß einer weiteren bevorzugten Weiterbildung sind die elektrischen Zufuhrleitungen auf die elektrischen Kontaktstellen mittels eines Leitklebers aufgeklebt.

Gemäß einer weiteren bevorzugten Weiterbildung befindet sich die Viskositätssensoreinrichtung in einem Schutzbehälter mit einem Boden und einer Kappe, der in die Flüssigkeit einbringbar ist.

Gemäß einer weiteren bevorzugten Weiterbildung sind die elektrischen Zufuhrleitungen über Durchführungen, insbesondere Glasdurchführungen, in der Kappe und/oder dem Boden des Schutzbehälters aus dem Behälter herausgeführt.

### ZEICHNUNGEN

Ein Ausführungsbeispiel der Erfindung ist in den Zeichnungen dargestellt und in der nachfolgenden Beschreibung näher erläutert.

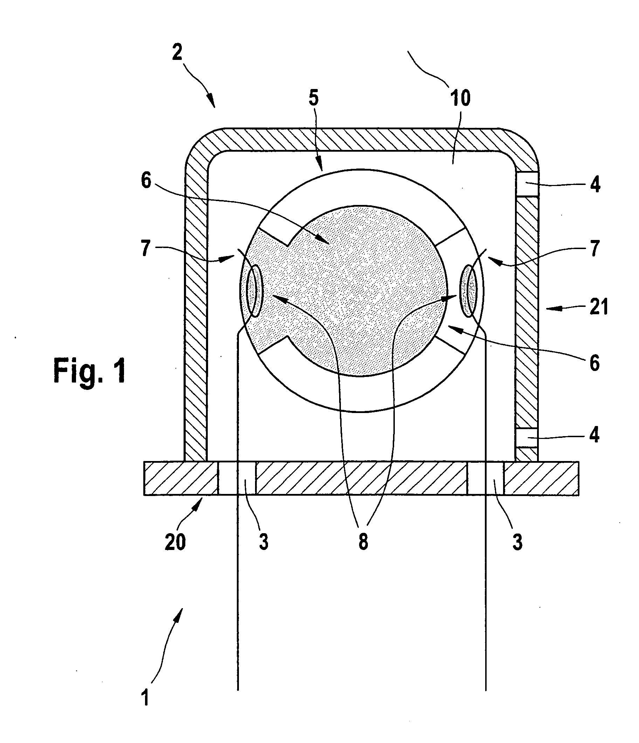

Fig. 1 zeigt eine Ausführungsform der erfindungsgemäßen Viskositätssensoranordnung und deren Autbau.

### BESCHREIBUNG DER AUSFÜHRUNGSBEISPIELE

Gemäß Fig. 1 ist ein Behälter 2 zweiteilig, bestehend aus einem Boden 20 und einer darauf lösbar angebrachten Kappe 21, ausgebildet und befindet sich vollständig in einer zu messenden Flüssigkeit 10. Die Kappe 21 weist seitlich und/oder oben angeordnete Öffnungen 4 für einen Flüssigkeitsaustausch auf, wobei die weiter oben angeordnete Öffnung vorteilhafterweise als Flüssigkeits-Einlass und die weiter unten angeordnete Öffnung vorteilhaft als Flüssigkeits-Auslass dienen. Der Boden 20 des Behälters 2 weist Glasdurchführungen 3 auf. Wird der Viskositätssensor anderweitig gegen mechanische Beschädigung geschützt, kann man die Kappe 21 weglassen. Dies verbessert den Flüssigkeitsaustausch an der Sensoroberfläche.

Die gesamte Sensoranordnung 1 befindet sich, wie oben bereits beschrieben, in einer Flüssigkeit 10, von welcher die Viskosität bzw. andere Flüssigkeitseigenschaften zu messen sind. Durch die öffnungen 4 ist somit auch der gesamte Behälter 2 mit der Flüssigkeit 10 gefüllt.

In dem vorliegenden ersten Ausführungsbeispiel wird als Flüssigkeit 10 Öl verwendet, wobei die verwendeten Materialien auf dieses Ausführungsbeispiel ausgelegt sind. Jedoch sind andere Flüssigkeiten mit entsprechend geeigneten Materialien vorstellbar

Ein Viskositätssensor 5, beispielsweise ein piezoelektrischer Quarzkristall, ist scheibenförmig ausgebildet und vollständig in die Flüssigkeit 10 in dem Behälter 2 eingetaucht. Der scheibenförmige Viskositätssensor 5 besitzt zwei elektrische Kontaktstellen 6, jeweils eine auf der Vorder- und eine auf der Rückseite, die gemäß dem vorliegenden Ausführungsbeispiel besondere Chromelektroden 6 ausgebildet sind. Vor ihrer Aufbringung mittels eines Sputterprozesses werden nämlich die darunterliegenden Oberfläche des Quarzkristalls poliert. Bei einer spezifischen Anwendung in Öl, beispielsweise Motor- oder Getriebeöl, haben sich derart polierte Chromelektroden als besonders robust erwiesen.

Die Kontaktstellen 6 sind über einen geeigneten Leitklebstoff 8 mit elektrischen Zufuhrleitungen 7 verbunden, die gemäß dem vorliegenden Ausführungsbeispiel als vergoldete oder verchromte Drähte ausgebildet sind. Auch diese vergoldeten bzw. verchromten Drähte haben sich bei einer spezifischen Anwendung in Öl als besonders robuste Leitermaterialien erwiesen. Die elektrischen Zuführleitungen 7 sind zusätzlich als geschlitzte Kontaktfedern 7 für eine mechanische Aufnahme der piezo-elektrischen Quarzscheibe ausgebildet.

Der Leitklebstoff 8 gewährleistet die elektrische und mechanische Kontaktierung der piezo- elektrischen Quarzscheibe 5 mit den Kontaktfedern 7 an den Kontaktstellen 6. Der isotrop elektrisch leitende Klebstoff 8 besteht gemäß dem vorliegenden Ausführungsbeispiel vorteilhaft aus Epoxidharz. Phenolharz und/oder Polyimid. Vorzugsweise basiert das Material des Leitklebstoffes 8 auch aus einer Epoxy-Phenolbasis. Die isotropen Leitklebstoffe 8 sind mit Metallteilchen, vorzugsweise Nickelund/oder Goldteilchen. in Flake- oder Kugelform bzw. Mischungen daraus versehen. Dabei besitzen die Nickel- bzw. Goldteilchen eine Teilchengröße von etwa 2 µm bis 20 µm. Die Konzentration der Nickel- bzw. Goldteilchen in dem Leitklebstoff 8 beträgt In etwa 75 bis 95 Gew.-%.

Die elektrischen Zufuhrleitungen 7 können entweder direkt durch den Boden 20 des Behälters 2 mittels den Glasdurchführungen 3 geführt sein, oder durch geeignete Verbindungstechniken, beispielsweise Schweißen mit entsprechenden Anschlussdrähten im Boden 20 des Behälters 2 verbunden sein. Entscheidend ist, dass eine elektrische Verbindung der Sensoreinrichtung 5 über die Kontaktstellen 6 und den elektrischen Zufuhrleitungen 7 mit einer Ansteuer-/Auswerteelektronik außerhalb des Behälters 2 für eine elektrische Ansteuerung der Sensoreinrichtung 5 und eine anschließende Auswertung der Ergebnisse hergestellt wird, wobei die verwendeten Kontaktstellen 6, Leitklebstoffe 8 und elektrischen Zufuhrleitungen 7 bezüglich der zu messenden Flüssigkeit 10 resistent sind.

### BEZUGSZEICHENLISTE

| | |
|---|---|
| 1 | Viskositätssensoranordnung |
| 2 | Behälter |
| 3 | Glasdurchführungen |
| 4 | Öffnungen |
| 5 | Quarzsensor |
| 6 | Kontaktstellen |
| 7 | Kontaktfedern |
| 8 | Leitklebstoff |
| 10 | Flüssigkeit |
| 20 | Boden |
| 21 | Kappe |

## Patentansprüche

1. Viskositätssensoranordnung zur Messung der Viskosität einer Flüssigkeit ( 10) mit:
einer piezo-elektrischen Viskositätssensoreinrichtung (5), die sich vollständig in der zu messenden Flüssigkeit (10) befindet und elektrische Kontaktstellen (6) für eine elektrische Ansteuerung von Volumenschwingungen auf ihrer Oberfläche aufweist, die bezüglich der Flüssigkeit (10) resistent sind;
elektrischen Zufuhrleitungen (7), die bezüglich der Flüssigkeit (10) resistent sind und die einerseits mit einer Ansteuer-/ Auswerteelektronik außerhalb der Flüssigkeit (10) und andererseits mit den Kontaktstellen (6) auf der Oberfläche der Viskositätssensoreinrichtung (5) verbunden sind;
wobei die Kontaktstellen aus Chrom bestehen und sich auf polierten Bereichen der Oberfläche der Viskositätssensoreinrichtung (5) befinden.

2. Viskositätssensoranordnung nach Anspruch 1, **dadurch gekennzeichnet, dass** die piezo-elektrische Viskositätssensoreinrichtung (5) als scheibenförmiger Quarzkristall ausgebildet, der durch die elektrische Ansteuerung zu Scherschwingungen anregbar ist, dass die Kontaktstellen (6) der Viskositätssensoreinrichtung (5) auf der Vorder- und Rückseite des scheibenförmigen Quarzkristalls ausgebildet sind.

3. Viskositätssensoranordnung nach Anspruch 2, **dadurch gekennzeichnet, dass** die Kontaktstellen (6) der Viskositätssensoreinrichtung (5) die Vorder- und Rückseite in einem Randbereich freilassen.

4. Viskositätssensoranordnung nach einem der vorhergehenden Ansprüche, **dadurch gekennzeichnet. dass** die elektrischen Zufuhrleitungen (7) als Kontaktfedern ausgebildet sind.

5. Viskositätssensoranordnung nach Anspruch 4, **dadurch gekennzeichnet, dass** die elektrischen Zufuhrleitungen (7) auf die elektrischen Kontaktstellen (6) mittels eines Leitklebers (8) aufgeklebt sind.

6. Viskositätssensoranordnung nach einem der vorhergehenden Ansprüche, **dadurch gekennzeichnet, dass** sich die Viskositätssensoreinrichtung (5) in einem Schutzbehälter (2) mit einem Boden (20) und einer Kappe (21) befindet, der in die Flüssigkeit (10) einbringbar ist.

7. Viskositätssensoranordnung nach Anspruch 6, **dadurch gekennzeichnet, dass** die elektrischen Zufuhrleitungen (7) über Durchführungen (3), insbesondere Glasdurchführungen (3), in der Kappe (21) und/oder dem Boden (20) des Schutzbehälters (2) aus dem Behälter (2) herausgeführt sind.

8. Verfahren zur Herstellung einer Viskositätssensoranordnung zur Messung der Viskosität einer Flüssigkeit (10) mit:
Bereitstellen einer piezo-elektrischen Viskositätssensoreinrichtung (5), die elektrische Kontaktstellen (6) für eine elektrische Ansteuerung von Volumenschwingungen auf ihrer Oberfläche aufweist, die bezüglich der Flüssigkeit (10) resistent sind;
Bereitstellen von elektrischen Zufuhrleitungen (7), die bezüglich der Flüssigkeit (10) resistent sind und die einerseits mit einer Ansteuer-/ Auswerteelektronik außerhalb der Flüssigkeit (10) und andererseits mit den Kontaktstellen (6) auf der Oberfläche der Viskositätssensoreinrichtung (5) verbunden sind;
wobei die Oberfläche der Viskositätssensoreinrichtung (5) zumindest in Bereichen poliert wird, in denen anschließend die Kontaktstellen (6) aus Chrom auf die Oberfläche der Viskositätssensoreinrichtung (5) aufgebracht werden; und
Aufbringen der Kontaktstellen (6) aus Chrom auf die Oberfläche der Viskositätssensoreinrichtung (5).
